# EUROPEAN PATENT SPECIFICATION

(11) **EP 3 388 721 B1**
(45) Date of publication and mention of the grant of the patent: **22.06.2022**
(21) Application number: 16873246.9
(22) Date of filing: 15.11.2016
(51) Int. Cl.: F16K 11/02, F16K 11/048, F16K 17/02, F16K 17/04, F16K 27/02, F24D 19/10

(54) **THREE-WAY VALVE**
DREIWEGEVENTIL
VANNE À TROIS VOIES

(30) Priority: 07.12.2015 KR 20150173321
(43) Date of publication of application: 17.10.2018
(73) Proprietor: Kyungdong Navien Co., Ltd., Pyeongtaek-si, Gyeonggi-do 17704 (KR)
(72) Inventor: MIN, Man Hong, Seoul 08501 (KR); YANG, Hyun Ik, Seoul 08501 (KR)
(74) Representative: Habermann, Hruschka & Schnabel
(86) International application number: PCT/KR2016/013148
(87) International publication number: WO 2017/099380

(56) References cited:
- EP-A1- 1 884 720
- EP-A1- 2 628 984
- WO-A1-2012/108140
- WO-A1-2013/032186
- CN-U- 204 025 774
- DE-U1-202005 016 372
- JP-A- 2015 028 364
- JP-A- 2015 028 364
- KR-A- 20090 055 322
- KR-A- 20110 040 485

## Description

### [Technical Field]

The present invention relates to a three-way valve, and more specifically, to a three-way valve through which heating water is bypassable toward a hot water heat exchanger when an overpressure occurs at a side of a heating portion.

### [Background Art]

Generally, a three-way valve may be formed such that an inlet and outlets of a valve housing are formed in three directions, change a direction of a fluid flow from the inlet to the outlets according to the movement of a valve element, and have a structure in which a fluid introduced through one inlet is selectively discharged through two different outlets.

Such a three-way valve is provided in a boiler, and opening and closing directions of the three-way valve are controlled to supply heating water heated by a main heat exchanger to any one of a heating target area or a hot water heat exchanger.

During heating, since the heating water heated by the main heat exchanger is supplied to the heating target area through the three-way valve, the heating water is blocked from flowing to the hot water heat exchanger. In this case, a pressure of the heating water may be abnormally increased due to blockage of a pipe at the heating target area.

In this case, in order to reduce an overpressure of the heating water by moving the heating water to the hot water heat exchanger, a bypass unit is necessary in the three-way valve such that the heating water bypasses toward the hot water heat exchanger.

As the related art containing the bypass unit, "Improved three-way diverter valve" was disclosed in European Patent Laid-open No. 2628984.

In the related art, a first return spring 40 and a second return spring 41 are provided, and in a case in which an overpressure occurs at a heating portion, a valve element 24 compresses the second return spring 41 using a pressure and opens a hole 22 so that heating water bypasses.

The valve element 24 vertically moves even when a bypass function is performed by the second return spring 41 and vertically moves even when a normal operation is performed by the piston 27.

Accordingly, the number of operations of the one valve element 24 is increased by the number of bypass operations due to an overpressure of the heating portion, an amount of wear of an O-ring 28 coupled to the valve element 24 is thus increased, thereby reducing durability of the valve.

From JP 2015 028364 A a small-sized motor drive control valve which controls a total water quantity and a bypass flow rate is known.

### [Disclosure]

### [Technical Problem]

The present invention as defined by the subject matter of the appended claims is directed to providing a three-way valve including a valve member for supplying heating water and a valve member for performing a bypass function, which are independently operated to provide improved durability of the three-way valve.

### [Technical Solution]

One aspect of the present invention provides a three-way valve including: a valve housing (110) in which an inlet (111) through which heating water is introduced, a first outlet (112) configured to supply the heating water introduced through the inlet (111) to a heating target area, and a second outlet (113) configured to supply the heating water introduced through the inlet (111) to a hot water heat exchanger are integrally formed; a first valve member (240) configured to be opened or closed so as to selectively open any one of the first outlet (112) or the second outlet (113); a drive unit (400) configured to provide a driving force to open or close the first valve member (240); and a second valve member (220, 220-1) configured to, when a pressure of heating water of a side of the first outlet (112) is higher than a set pressure in a state in which the first valve member (240) opens a side of the first outlet (112) and closes a side of the second outlet (113), open a bypass hole (212a) to allow the heating water to flow toward the second outlet (113) and be operated independently from the first valve member (240).

The first valve member (240) is coupled to a valve shaft (310) linearly moved by the drive unit (400); the first valve member (240) includes a heating side valve (241) coupled to one side of the valve shaft (310) and configured to open or close a first opening (216) which communicates with the first outlet (112), and a hot water side valve (242) coupled to the other side of the valve shaft (310) and configured to open or close a second opening (217) which communicates with the second outlet (113); and the valve shaft (310) and the first valve member (240) are pushed toward the drive unit (400) by an elastic force of a first spring (340).

The inlet (111) may be formed in a side portion between the first opening (216) and the second opening (217) .

A valve seat member (210) configured to seal a space between the first valve member (240) and the second valve member (220, 220-1) is inserted into the valve housing (110); and the valve seat member (210) is formed by integrally forming a first valve seat portion (211) through which the first opening (216) is formed in the valve seat member (210), a second valve seat portion (212) through which the second opening (217) is formed in the valve seat member (210), and a plurality of connecting portions (214) connecting the first valve seat portion (211) and the second valve seat portion (212).

The bypass hole (212a) may pass through the second valve seat portion (212), and a plurality of bypass holes identical to the bypass hole (212a) may be formed along a circumference of the second valve seat portion (212).

The second valve member (220, 220-1) may include a body (221) inserted into an inner space of the valve seat member (210), and a valve (222, 222-1) which protrudes outward from the body (221) and opens or closes the bypass hole (212a).

A power transmission portion housing (120) for accommodating a power transmission member (320, 330) configured to transmit power of the drive unit (400) may be coupled to an upper portion of the valve housing (110); the valve seat member (210) may include a support (213) spaced apart from the second valve seat portion (212) and configured to support a lower end portion of the power transmission portion housing (120) inserted into a housing body (114) of the valve housing (110), and a plurality of connecting portions (215) connecting the support (213) and the second valve seat portion (212); and the valve (222, 222-1) may be moved while being guided by the connecting portion (215) in a state in which the valve (222, 222-1) is positioned between the adjacent connecting portions (215).

A guide protrusion (223) protruding outward from an outer surface of the body (221) may be formed on the second valve member (220, 220-1), and a guide groove (215a) in which the guide protrusion (223) is inserted and guided when the second valve member (220, 220-1) is moved may be formed in an inner surface of the connecting portion (215).

The hot water side valve (242) of the first valve member (240) may be operated in a state in which the hot water side valve (242) is positioned in the body (221) of the second valve member (220, 220-1).

A side of the second valve member (220, 220-1) opposite the bypass hole (212a) may be elastically supported by a second spring (260).

A power transmission portion housing (120) for accommodating a power transmission member (320, 330) configured to transmit power of the drive unit (400) may be coupled to an upper portion of the valve housing (110). The valve shaft (310) having an upper end coupled to the power transmission member (320) may be provided to pass through the power transmission portion housing (120). The second valve member (220, 220-1) may include a body (221) inserted into an inner space of the valve seat member (210) and having a ring shape, a valve (222, 222-1) which protrudes outward from the body (221) and opens or closes the bypass hole (212a), and a plurality of ribs (224) which protrude outward from an outer surface of the body (221) and are spaced a predetermined distance from each other along a circumference of an outer surface of the body (221), and an upper end and a lower end of the second spring (260) may be supported by a lower surface of the power transmission portion housing (120) and the rib (224), respectively.

The first spring (340) may be elastically supported between an inner surface of a lower portion of the power transmission portion housing (120) and a lower side surface of the power transmission member (320); and an O-ring (361) may be interposed between the valve shaft (310) and a through portion of the power transmission portion housing (120) to maintain a seal.

The valve seat member (210) may be formed by injection molding a synthetic resin. A valve seat protrusion (212b) protruding toward the second valve member (220) may be formed on an outer circumferential surface of the bypass hole (212a); and the second valve member (220) configured to come into contact with the valve seat protrusion (212b) may be formed with a flat surface.

The second valve member (220) may be formed of an acetal resin (polyoxometalate (POM)).

A packing (280-1) may be coupled to the valve (222-1), and the bypass hole (212a) may be opened or closed by the packing (280-1).

### [Advantageous Effects]

According to the present invention, since a first valve member for supplying heating water and a second valve member for performing a bypass function are independently operated, wear of a packing provided on the first valve member is prevented, and thus durability of a three-way valve can be improved.

In addition, since the second valve member (220) is positioned in the first valve member, the three-way valve can be miniaturized.

In addition, since the second valve member is vertically moved while being guided by a valve seat member, the second valve member can be stably moved.

In addition, since a valve seat protrusion is formed on the valve seat member in which a bypass hole is formed and the second valve member comes into line contact with the valve seat protrusion, leakage due to a contact failure can be prevented.

In addition, since the second valve member is formed of an acetal resin having high lubrication, the second valve member can be smoothly operated with the valve seat member.

### [Description of Drawings]

FIG. 1 is a perspective view illustrating a three-way valve according to the present invention.
FIG. 2 is an exploded perspective view illustrating a partial configuration of the three-way valve illustrated in FIG. 1.
FIG. 3 is a cross-sectional view illustrating an internal structure of the three-way valve illustrated in FIG. 1.
FIG. 4 is a perspective view illustrating a second valve member illustrated in FIG. 2.
FIG. 5 is a perspective view illustrating a valve seat member illustrated in FIG. 2.
FIG. 6 is a cross-sectional view illustrating an operating state of a first valve member in a heating mode.
FIG. 7 is a cross-sectional view illustrating an operating state of the second valve member in the heating mode.
FIG. 8 is a cross-sectional view illustrating an operating state of the first valve member in a hot water mode.

**[Reference Numerals]**

| | | | |
|---|---|---|---|
| 110: | VALVE HOUSING | 111: | INLET |
| 112: | FIRST OUTLET | 113: | SECOND OUTLET |
| 114: | HOUSING BODY | 114A: | STEP |
| 120: | POWER TRANSMISSION PORTION HOUSING | | |
| 121: | FIRST HOUSING | | |
| 122: | SECOND HOUSING | | |
| 123: | THIRD HOUSING | 124: | THROUGH HOLE |
| 126: | HOUSING SUPPORT | 130: | COVER |
| 211: | FIRST VALVE SEAT PORTION | | |
| 211A: | O-RING INSERTION GROOVE | | |
| 212: | SECOND VALVE SEAT PORTION | 212A: | BYPASS HOLE |
| 212B: | VALVE SEAT PROTRUSION | 213: | SUPPORT |
| 214, 215: | CONNECTING PORTION | 215A: | GUIDE GROOVE |
| 216: | FIRST OPENING | 217: | SECOND OPENING |
| 220, 220-1: | SECOND VALVE MEMBER | 221A, 221B: | BODY |
| 222, 222-1: | VALVE | 223: | GUIDE PROTRUSION |
| 224: | RIB | 230, 270, 361, 362, 363: | O-RING |
| 240: | FIRST VALVE MEMBER | | |
| 241: | HEATING SIDE VALVE | | |
| 242: | HOT WATER SIDE VALVE | | |
| 243: | VALVE CONNECTING PORTION | 244: | THROUGH HOLE |
| 245: | HEATING SIDE VALVE PACKING | | |
| 246: | HOT WATER SIDE VALVE PACKING | | |
| 260: | SECOND SPRING | 280-1: | PACKING |
| 310: | VALVE SHAFT | 320: | SECOND CAM MEMBER |
| 330: | FIRST CAM MEMBER | 340: | FIRST SPRING |
| 350: | SHAFT GUIDE MEMBER | 400: | DRIVE UNIT |

### [Modes of the Invention]

Hereinafter, configurations and operations related to exemplary embodiments of the present invention will be described in detail with reference to the accompanying drawings.

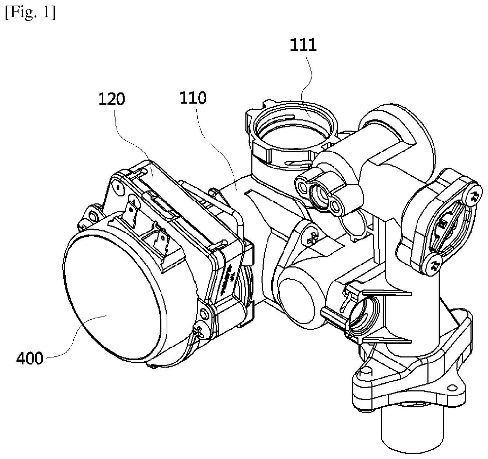

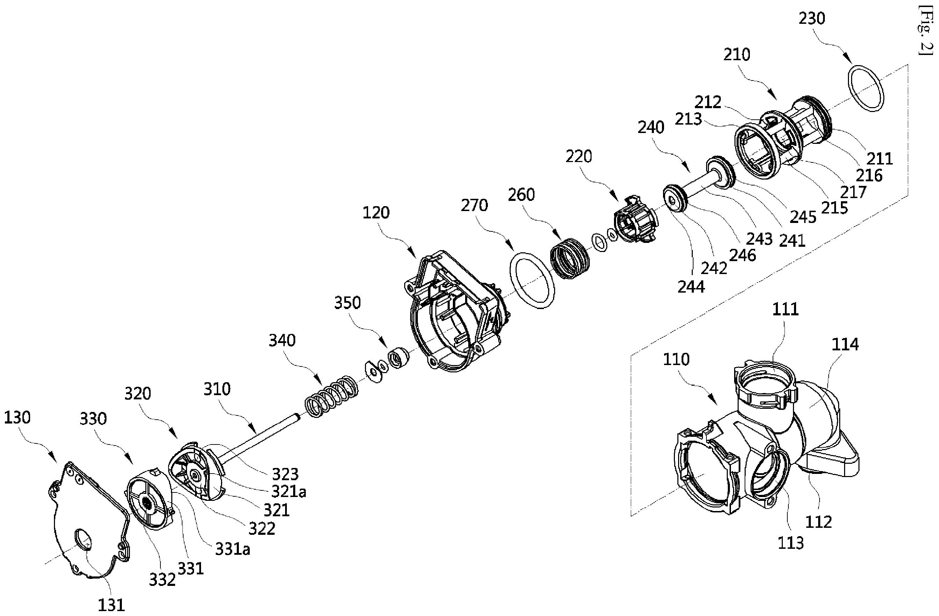

Referring to FIGS. 1 to 3, a three-way valve of the present invention includes a valve housing 110 in which an inlet 111, a first outlet 112, and a second outlet 113are integrally formed, a valve seat member 210 inserted into an inner space of the valve housing 110 and serving as a valve seat, a first valve member 240 configured to selectively open or close any one of the first outlet 112 and the second outlet 113, a second valve member 220 configured to operate independently from the first valve member 240 such that heating water bypasses toward a hot water heat exchanger (not shown) when a pressure of the heating water is greater than a set pressure in a heating mode, a drive unit 400 configured to provide a driving force for opening and closing the first valve member 240, power transmission members 320 and 330 for transmitting the driving force of the drive unit 400 to the first valve member 240, a power transmission portion housing 120 for accommodating the power transmission members 320 and 330, and a cover 130.

In the valve housing 110, a housing body 114 formed of a synthetic resin and having a cylindrical shape having a vertical length, the inlet 111 through which heating water heated by a main heat exchanger (not shown) of a boiler is introduced, the first outlet 112 for providing the heating water introduced through the inlet 111 to a heating target area (not shown) for heating, and the second outlet 113 for providing the heating water introduced through the inlet 111 to a hot water heat exchanger (not shown) for supplying hot water are integrally formed.

The valve seat member 210 and the first valve member 240 are inserted into an inner space of the housing body 114, and the power transmission portion housing 120 is inserted into and coupled to an upper opening of the housing body 114.

The inlet 111 is formed at a side portion between the first opening 216 and the second opening 217 of the valve seat member 210. The inlet 111 protrudes from the housing body 114 in a lateral direction. The first outlet 112 is bent from a lower end portion of the housing body 114 at 90°, protrudes in the lateral direction, and is formed at a location lower than that of the inlet 111. The second outlet 113 is located at a higher location than the inlet 111 and protrudes from the housing body 114 in the lateral direction.

As a step 114a protruding inward from an inner circumferential surface of the housing body 114 is formed at a location higher than that of the inlet 111, in a case in which the valve seat member 210 is inserted into the inner space of the housing body 114, the second valve seat portion 212 is hooked to the step 114a, and thus a location of the second valve seat portion 212 is fixed.

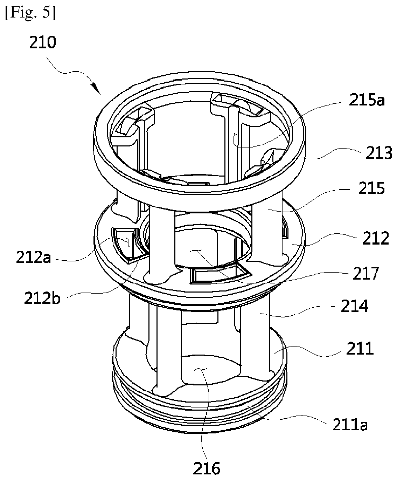

Referring to FIG. 5, in the valve seat member 210, a first valve seat portion 211 which is formed of a synthetic resin and has a ring shape and in which a first opening 216 is formed, a second valve seat portion 212 which has a ring shape and in which a second opening 217 is formed, a support 213 which supports a lower end portion of the power transmission portion housing 120 inserted into the housing body 114, a plurality of connecting portions 214 having a cylindrical shape and configured to connect the first valve seat portion 211 and the second valve seat portion 212, and a plurality of connecting portions 215 having a cylindrical shape and configured to connect the second valve seat portion 212 and the support 213.

An O-ring insertion groove 211a into which an O-ring 230 is inserted is formed in an outer circumferential surface of the first valve seat portion 211. Sealing a space between the first valve seat portion 211 and the inner circumferential surface of the housing body 114 is maintained by the O-ring 230.

Spaces between the plurality of adjacent connecting portions 214 communicate with the inlet 111. Accordingly, heating water introduced through the inlet 111 is introduced into the inner space of the housing body 114 through the spaces between the connecting portions 214.

A plurality of bypass holes 212a opened or closed by the second valve member 220 are formed in the second valve seat portion 212. One bypass hole 212a is formed between each pair of adjacent connecting portions 215 and formed to vertically pass through the second valve seat portion 212. Accordingly, in a case in which a pressure of heating water is greater than the set pressure, heating water introduced through the inlet 111 flows toward the hot water heat exchanger through the bypass hole 212a and the second outlet 113, and thus an overpressure state is alleviated.

The valve seat member 210 is formed by injection molding a synthetic resin. During the injection molding, deformation through contraction may occur, and thus maintaining surface contact between the valve seat member 210 and the second valve member 220 may be difficult, and leakage may occur. In the present invention, to prevent the leakage, a valve seat protrusion 212b protruding toward the second valve member 220 is formed on a circumferential surface of the bypass hole 212a, and the second valve member 220 configured to come into contact with the valve seat protrusion 212b is formed with a flat surface, and thus line contact may occur at the contact portions and the leakage can be prevented.

Guide grooves 215a concavely vertically formed are formed in inner surfaces of the connecting portions 215.

The first valve member 240 is coupled to the lower end of the valve shaft 310 and linearly vertically moved by driving of the drive unit 400 so that the inlet 111 communicates with the first outlet 112 or the second outlet 113.

The first valve member 240 includes a heating side valve 241 coupled to the lower end of the valve shaft 310 and configured to open or close the first opening 216, a hot water side valve 242 coupled to a valve shaft 310 spaced upward from the heating side valve 241 and configured to open or close the second opening 217, and a valve connecting portion 243 having a cylindrical shape and configured to connect the heating side valve 241 and the hot water side valve 242.

A through hole 244 passing through centers of the heating side valve 241, the valve connecting portion 243, and the hot water side valve 242 is formed from upper portions to lower portions thereof, and the valve shaft 310 is inserted into and coupled to the through hole 244.

A heating side valve packing 245 is coupled to an outer circumferential surface of the heating side valve 241, and as the heating side valve packing 245 comes into contact with an inner end 211b of a lower surface of the first valve seat portion 211, the first opening 216 is closed by the heating side valve 241.

A hot water side valve packing 246 is coupled to an outer circumferential surface of the hot water side valve 242, and as the hot water side valve packing 246 comes into contact with an inner end 212c of an upper surface of the second valve seat portion 212, the second opening 217 is closed by the hot water side valve 242.

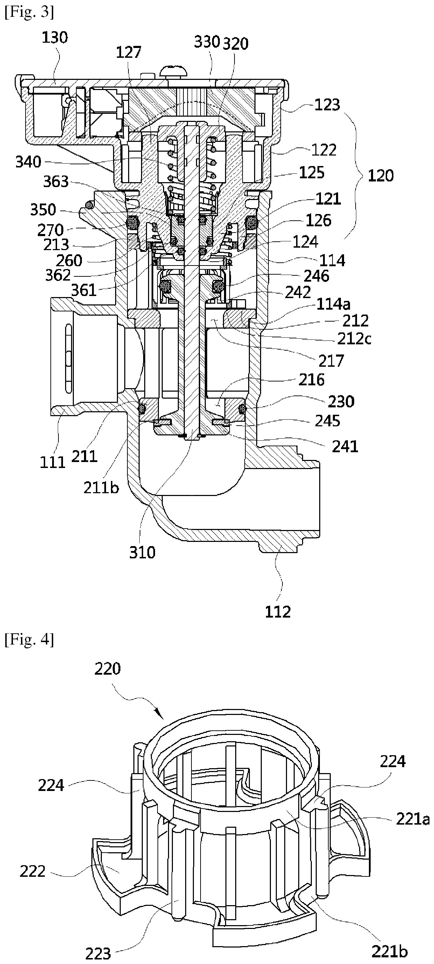

Referring to FIG. 4, the second valve member 220 includes bodies 221a and 221b inserted into an inner space of the valve seat member 210 and valves 222 protruding outward from the bodies 221a and 221b and configured to open or close the bypass hole 212a.

The bodies 221a and 221b include an upper body 221a having a ring shape and a lower body 221b having a ring shape and spaced downward from the upper body 221a. The upper body 221a and the lower body 221b are connected by a plurality of ribs 224 provided along a circumference thereof. The rib 224 protrudes further outward than outer surfaces of the upper body 221a and the lower body 221b.

Guide protrusions 223 protruding outward from side surfaces of the ribs 224 are formed on some of the plurality of ribs 224. The guide protrusion 223 is formed on the rib 224 provided between each pair of adjacent valves 222 and protrudes outward from the rib 224. The guide protrusion 223 is inserted into the guide groove 215a formed in the connecting portion 215, and while the guide protrusion 223 is guided by the guide groove 215a, the second valve member 220 is moved vertically. As described above, since the second valve member 220 is moved vertically in a state in which an inner surface of the guide protrusion 223 is in contact with the guide groove 215a, the second valve member 220 may be formed of an acetal resin (polyoxometalate (POM)) having high lubrication to prevent wear thereof.

The valve 222 is formed in a trapezoid shape in which a width of an outer side is greater than that of an inner side, and since the valve 222 is moved vertically while a side surface of the valve 222 is guided by the pair of connecting portions 215 in a state in which the valve 222 is located between the pair of adjacent connecting portions 215, the valve is stably operated.

As described above, since a lower surface of the valve 222 configured to come into contact with the valve seat protrusion 212b is formed with a flat surface, line contact occurs at the contact portions.

An upper end surface of the second valve member 220 is elastically supported by a second spring 260. A lower end of the second spring 260 is supported by an upper end of the rib 224 of the second valve member 220, and an upper end of the second spring 260 is supported by a lower end surface of the first housing 121 of the power transmission portion housing 120 which will be described below. Accordingly, in a case in which a pressure of heating water is normal, the second valve member 220 is depressed by the second spring 260 to close the bypass hole 212a, and in a case in which a pressure of heating water is greater than the set pressure, the second valve member 220 is lifted to compress the second spring 260. Here, the set pressure may be set to a spring constant of the second spring 260.

Meanwhile, the hot water side valve 242 of the first valve member 240 is provided to be operated in a state in which the hot water side valve 242 is positioned in a body 221 of the second valve member 220. That is, since the entire second valve member 220 is formed in a cylindrical shape and the hot water side valve 242 is positioned in an inner space of the cylindrical shaped second valve member 220, a total volume of the second valve member 220 and the first valve member 240 may be small, and the first valve member 240 may be installed adjacent to the second valve member 220.

The power transmission portion housing 120 is coupled to the housing body 114 in a state in which the power transmission portion housing 120 is inserted into the housing body 114 through an upper opening of the housing body 114.

The power transmission portion housing 120 includes a first housing 121 formed in a substantial cylindrical shape, a second housing 122 extending upward from the first housing 121 and having a diameter greater than that of the first housing 121 so that a space in which the power transmission member 320 is vertically moved is provided, and a third housing 123 extending upward from the second housing 122 and having a cross section greater than that of the second housing 122.

A through hole 124 through which the valve shaft 310 passes is formed in a center of the lower end portion of the first housing 121. A shaft guide member 350 having a cylindrical shape is inserted into an inner space 125 of the first housing 121, and the valve shaft 310 passes through a center of the shaft guide member 350.

An O-ring 361 is interposed between the valve shaft 310 and an inner circumferential surface of the first housing 121, an O-ring 362 is interposed between an outer circumferential surface of the shaft guide member 350 and the inner circumferential surface of the first housing 121, and an O-ring 363 is interposed between the valve shaft 310 and an inner circumferential surface of the shaft guide member 350. Accordingly, since sealing of the inner space of the power transmission portion housing 120 is maintained by the O-rings 361, 362, and 363, the first spring 340 is not exposed to heating water, and thus corrosion of the first spring 340 may be prevented.

A housing support 126 protruding downward from the first housing 121 to be supported by being hooked to an inner side of the support 213 of the valve seat member 210 is formed on an outer circumferential surface of the first housing 121. An upper portion of the second spring 260 is inserted into a space between the housing support 126 and the first housing 121, and the upper end of the second spring 260 is supported by a lower surface of the first housing 121.

An O-ring 270 is interposed between an outer surface of the housing support 126 and an inner surface of the housing body 114 to maintain a seal therebetween.

A first spring 340 is provided above the shaft guide member 350. An upper end and a lower end of the first spring 340 are supported by a lower surface of the power transmission member 320 and an upper surface of the shaft guide member 350, respectively. Accordingly, an elastic force is applied to the valve shaft 310 and the first valve member 240 by the first spring 340 so that the valve shaft 310 and the first valve member are pushed and lifted toward the drive unit 400. In a case in which the power transmission member 320 moves downward, the first spring 340 is compressed to move the valve shaft 310 downward, and in a case in which the power transmission member 320 moves upward, the first spring 340 is restored from the compressed state to move the valve shaft 310 upward.

The power transmission members 320 and 330 include the first cam member 330 rotated by driving of the drive unit 400, and a second cam member 320 configured to vertically move according to the rotation of the first cam member 330 while being in contact with the first cam member 330.

The first cam member 330 includes a first cam body 331 formed in a ring shape and a motor shaft coupling portion 332 located at a central portion in the cam body 331. An outline of a lower end surface 331a of the first cam body 331 has peaks and valleys. A shaft (not shown) of a motor which is the drive unit 400 is inserted into the motor shaft coupling portion 332, an inner circumferential surface of the motor shaft coupling portion 332 is formed in a tooth shape, and when the motor is driven, the first cam member 330 is rotated.

The second cam member 320 includes a second cam body 321 formed in a ring shape, a shaft coupling portion 322 located at a central portion of the second cam body 321, and a guide hole 323 vertically passing through the second cam body 321 at a side of the shaft coupling portion 322.

An outline of an upper end surface 321a of the second cam body 321 has peaks and valleys, and the upper end surface 321a is in contact with the lower end surface 331a of the first cam body 331. Since the valve shaft 310 is coupled to the shaft coupling portion 322, the second cam member 320 and the valve shaft 310 are integrally moved vertically.

A guide rod 127 protruding upward from an upper end of the first housing 121 is inserted into the guide hole 323 such that the second cam member 320 is moved only vertically, and horizontal rotation of the second cam member 320 is restricted. A plurality of guide rods and a plurality of guide holes may be formed for the guide rod 127 and the guide hole 323, respectively. Accordingly, the second cam member 320 may be moved only vertically along the guide rod 127 by driving of the drive unit 400.

When the peaks or valleys of the lower end surface 331a of the first cam body 331 come into contact with the valleys or peaks of the upper end surface 321a of the second cam body 321, the second cam member 320 is positioned in a position in which the second cam member 320 is moved upward, and when the peaks of the lower end surface 331a of the first cam body 331 come into contact with the peaks of the upper end surface 321a of the second cam body 321, the second cam member 320 is positioned in a position in which the second cam member 320 is moved downward.

An opening at an upper side of the third housing 123 is configured to be closed by a cover 130, and the first cam member 330 and the second cam member 320 are accommodated in an inner space of the third housing 123.

The drive unit 400 is provided above the cover 130, and a motor shaft through hole 131 through which a motor shaft of the drive unit 400 passes is formed in the cover 130.

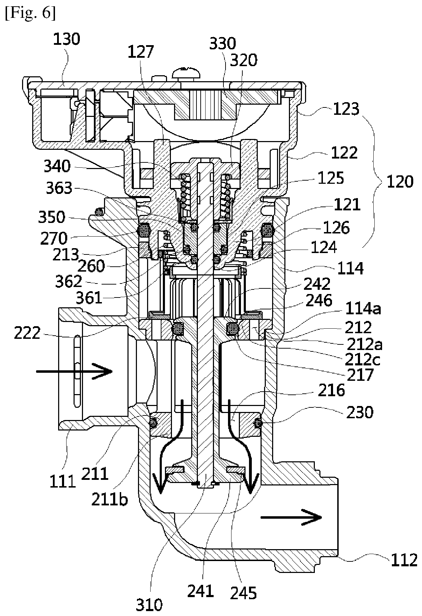

Hereinafter, operations of the first valve member 240 and the second valve member 220 will be described with reference to FIGS. 6 to 8.

Referring to FIG. 6, in a heating mode, as the peaks of the first cam member 330 are brought into contact with the peaks of the second cam member 320 by driving of the drive unit 400, the second cam member 320, the valve shaft 310, and the first valve member 240 are moved downward, and the first spring 340 is compressed. As the first valve member 240 is moved downward, the heating side valve 241 and the heating side valve packing 245 are spaced apart from the lower surface inner end 211b of the first valve seat portion 211, and thus the first opening 216 is opened. Conversely, as the hot water side valve 242 and the hot water side valve packing 246 are moved downward to come into contact with the upper surface inner end 212c of the second valve seat portion 212, the second opening 217 is closed. In the above described state, heating water introduced through the inlet 111 is discharged to the first outlet 112 through the first opening 216 and supplied to a heating target area. In this case, the second valve member 220 is depressed by the second spring 260, and a state in which the second valve member 220 closes the bypass hole 212a is maintained.

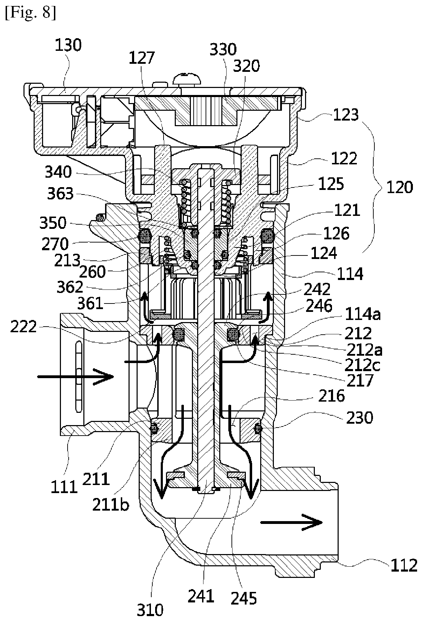

In the above described state, when a pressure of the heating water becomes greater than the set pressure due to internal blockage of a heating pipe, such as a heating pipe included in a heating target area, while heating is performed, as illustrated in FIG. 8, the first valve member 240 is in a state the same as FIG. 6, the second valve member 220 is pushed and moved upward to open the bypass hole 212a while compressing the second spring 260 due to the pressure of the heating water. Accordingly, the heating water introduced through the inlet 111 is discharged to the second outlet 113 through the bypass hole 212a, and an overpressure state of the heating pipe of the heating target area and the like is alleviated. In a case in which the heating water is bypassed as described above, since the first valve member 240 is not operated and only the second valve member 220 is operated, the number of operations of the first valve member 240 may be decreased, wear of the heating side valve packing 245 and the hot water side valve packing 246 may be prevented, and thus durability of the three-way valve may be improved.

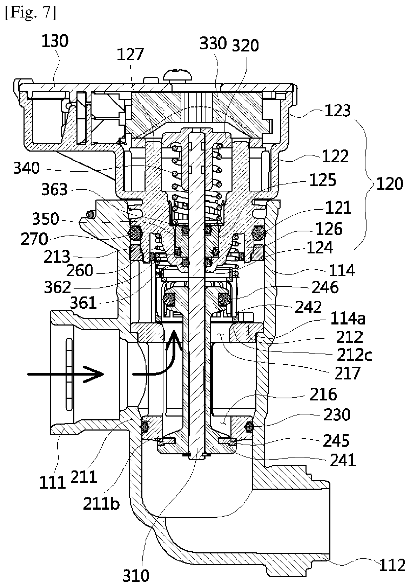

Referring to FIG. 7, in a hot water mode, as the peaks or valleys of the first cam member 330 are brought into contact with valleys or peaks of the second cam member 320 by driving of the drive unit 400, the second cam member 320, the valve shaft 310, and the first valve member 240 are moved upward by a restoring force of the first spring 340. As the first valve member 240 is moved upward, the heating side valve 241 and the heating side valve packing 245 come into contact with the lower surface inner end 211b of the first valve seat portion 211 so that the first opening 216 is closed. Conversely, as the hot water side valve 242 and the hot water side valve packing 246 are moved upward and spaced apart from the upper surface inner end 212c of the second valve seat portion 212, the second opening 217 is opened. In the above-described state, heating water introduced through the inlet 111 is discharged to the second outlet 113 through the second opening 217 and supplied to the hot water heat exchanger. In this case, a state in which the second valve member 220 is depressed by the second spring 260 to close the bypass hole 212a is maintained.

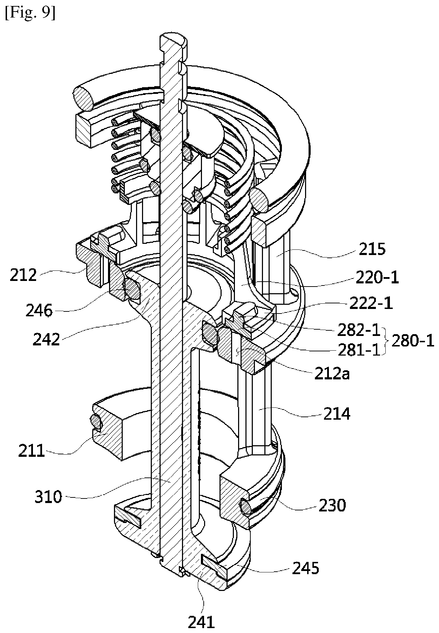

Although the valve 222 of the second valve member 220 has been illustrated as opening or closing the bypass hole 212a of the second valve seat portion 212 as described above, as illustrated in FIG. 9, a packing 280-1 formed of an elastic material may be coupled to a second valve member 220-1, and a bypass hole 212a may be opened and closed by the packing 280-1.

The packing 280-1 includes an opening and closing portion 281-1 having an area wide enough to cover an upper side of the bypass hole 212a, and a coupling portion 282-1 extending upward from an upper surface of the opening and closing portion 281-1 and coupled to a valve 222-1 of a second valve member 220-1.

As a coupling hole is formed in the valve 222-1, the coupling portion 282-1 of the packing 280-1 is coupled to the coupling hole such that decoupling is prevented in a state in which the coupling portion 282-1 is inserted into to the coupling hole.

As the bypass hole 212a is opened and closed by the packing 280-1 as described above, sealing may be maintained.

As described above, the present invention is not limited to the above described embodiments, the present invention may be modified by way of alternative embodiments made by those skilled in the art to which the present invention belongs without departing from the present invention claimed by the appended claims, and such modifications fall within the scope of the present invention.

## Claims

1. A three-way valve comprising:
a valve housing (110) in which an inlet (111) through which heating water is introduced, a first outlet (112) configured to supply the heating water introduced through the inlet (111) to a heating target area, and a second outlet (113) configured to supply the heating water introduced through the inlet (111) to a hot water heat exchanger are integrally formed;
a first valve member (240) configured to be opened or closed so as to selectively open any one of the first outlet (112) and the second outlet (113);
a drive unit (400) configured to provide a driving force to open or close the first valve member (240); and
a second valve member (220, 220-1) configured to, when a pressure of heating water of a side of the first outlet (112) is higher than a set pressure in a state in which the first valve member (240) opens a side of the first outlet (112) and closes a side of the second outlet (113), open a bypass hole (212a) to allow the heating water to flow toward the second outlet (113) and be operated independently from the first valve member (240),
**characterized in that**
the first valve member (240) is coupled to a valve shaft (310) linearly moved by the drive unit (400);
the first valve member (240) includes a heating side valve (241) coupled to one side of the valve shaft (310) and configured to open or close a first opening (216) which communicates with the first outlet (112), and a hot water side valve (242) coupled to the other side of the valve shaft (310) and configured to open or close a second opening (217) which communicates with the second outlet (113); and
the valve shaft (310) and the first valve member (240) is pushed toward the drive unit (400) by an elastic force of a first spring (340),
a valve seat member (210), configured to seal a space between the first valve member (240) and the second valve member (220, 220-1), is inserted into the valve housing (110); and
the valve seat member (210) is formed by integrally forming a first valve seat portion (211) through which the first opening (216) is formed in the valve seat member (210), a second valve seat portion (212) through which the second opening (217) is formed in the valve seat member (210), and a plurality of connecting portions (214) connecting the first valve seat portion (211) and the second valve seat portion (212) .

2. The three-way valve of claim 1, wherein the inlet (111) is formed at a side portion between the first opening (216) and the second opening (217).

3. The three-way valve of claim 1, wherein:
the bypass hole (212a) passes through the second valve seat portion (212); and
a plurality of bypass holes identical to the bypass hole (212a) are formed along a circumference of the second valve seat portion (212).

4. The three-way valve of claim 1, wherein the second valve member (220, 220-1) includes:
a body (221) inserted into an inner space of the valve seat member (210); and
a valve (222, 222-1) which protrudes outward from the body (221) and opens or closes the bypass hole (212a).

5. The three-way valve of claim 4, wherein:
a power transmission portion housing (120) for accommodating a power transmission member (320, 330) configured to transmit power of the drive unit (400) is coupled to an upper portion of the valve housing (110);
the valve seat member (210) includes a support (213) spaced apart from the second valve seat portion (212) and configured to support a lower end portion of the power transmission portion housing (120) inserted into a housing body (114) of the valve housing (110), and a plurality of connecting portions (215) connecting the support (213) and the second valve seat portion (212); and
the valve (222, 222-1) is moved while being guided by the connecting portion (215) in a state in which the valve (222, 222-1) is positioned between the adjacent connecting portions (215) .

6. The three-way valve of claim 5, wherein:
a guide protrusion (223) protruding outward from an outer surface of the body (221) is formed on the second valve member (220, 220-1); and
a guide groove (215a) in which the guide protrusion (223) is inserted and guided when the second valve member (220, 220-1) is moved is formed in an inner surface of the connecting portion (215).

7. The three-way valve of claim 4, wherein the hot water side valve (242) of the first valve member (240) is operated in a state in which the hot water side valve (242) is positioned in the body (221) of the second valve member (220, 220-1) .

8. The three-way valve of claim 1, wherein a side of the second valve member (220, 220-1) opposite the bypass hole (212a) is elastically supported by a second spring (260).

9. The three-way valve of claim 8, wherein:
a power transmission portion housing (120) for accommodating a power transmission member (320, 330) configured to transmit power of the drive unit (400) is coupled to an upper portion of the valve housing (110);
the valve shaft (310) having an upper end coupled to the power transmission member (320) is provided to pass through the power transmission portion housing (120);
the second valve member (220, 220-1) includes a body (221) inserted into an inner space of the valve seat member (210) and having a ring shape, a valve (222, 222-1) which protrudes outward from the body (221) and opens or closes the bypass hole (212a), and a plurality of ribs (224) which protrude outward from an outer surface of the body (221) and are spaced a predetermined distance from each other along a circumference of an outer surface of the body (221); and
an upper end and a lower end of the second spring (260) are supported by a lower surface of the power transmission portion housing (120) and the rib (224), respectively.

10. The three-way valve of claim 9, wherein:
the first spring (340) is elastically supported between an inner surface of a lower portion of the power transmission portion housing (120) and a lower side surface of the power transmission member (320); and
an O-ring (361) is interposed between the valve shaft (310) and a through portion of the power transmission portion housing (120) to maintain a seal.

11. The three-way valve of claim 8, wherein:
the valve seat member (210) is formed by injection molding a synthetic resin;
a valve seat protrusion (212b) protruding toward the second valve member (220) is formed on an outer circumferential surface of the bypass hole (212a); and
the second valve member (220) configured to come into contact with the valve seat protrusion (212b) is formed with a flat surface.

12. The three-way valve of claim 6, wherein the second valve member (220) is formed of an acetal resin, polyoxometalate, POM.

13. The three-way valve of claim 4, wherein:
a packing (280-1) is coupled to the valve (222-1); and
the bypass hole (212a) is opened or closed by the packing (280-1).

## Patentansprüche

1. Dreiwegeventil aufweisend:
ein Ventilgehäuse (110), in dem ein Einlass (111), durch den Heizwasser eingeleitet wird, ein erster Auslass (112), der so konfiguriert ist, dass er das durch den Einlass (111) eingeleitete Heizwasser einem Heizzielbereich zuführt, und ein zweiter Auslass (113), der so konfiguriert ist, dass er das durch den Einlass (111) eingeleitete Heizwasser einem Warmwasser-Wärmetauscher zuführt, integral ausgebildet sind;
ein erstes Ventilelement (240), das so konfiguriert ist, dass es geöffnet oder geschlossen werden kann, um selektiv den ersten Auslass (112) oder den zweiten Auslass (113) zu öffnen;
eine Antriebseinheit (400), die so konfiguriert ist, dass sie eine Antriebskraft zum Öffnen oder Schließen des ersten Ventilelements (240) bereitstellt; und
ein zweites Ventilelement (220, 220-1), das so konfiguriert ist, dass es, wenn ein Druck des Heizwassers auf einer Seite des ersten Auslasses (112) höher ist als ein eingestellter Druck in einem Zustand, in dem das erste Ventilelement (240) eine Seite des ersten Auslasses (112) öffnet und eine Seite des zweiten Auslasses (113) schließt, ein Bypass-Loch (212a) öffnet, um es dem Heizwasser zu ermöglichen, zu dem zweiten Auslass (113) zu fließen, und dass es unabhängig von dem ersten Ventilelement (240) betrieben wird,
**dadurch gekennzeichnet, dass**
das erste Ventilelement (240) mit einem Ventilschaft (310) gekoppelt ist, der von der Antriebseinheit (400) linear bewegt wird;
das erste Ventilelement (240) ein heizseitiges Ventil (241), das mit einer Seite des Ventilschafts (310) gekoppelt und so konfiguriert ist, dass es eine erste Öffnung (216) öffnet oder schließt, die mit dem ersten Auslass (112) in Verbindung steht, und ein heißwasserseitiges Ventil (242) umfasst, das mit der anderen Seite des Ventilschafts (310) gekoppelt und so konfiguriert ist, dass es eine zweite Öffnung (217) öffnet oder schließt, die mit dem zweiten Auslass (113) in Verbindung steht; und
der Ventilschaft (310) und das erste Ventilelement (240) durch eine elastische Kraft einer ersten Feder (340) in Richtung auf die Antriebseinheit (400) gedrückt wird,
ein Ventilsitzelement (210), das so konfiguriert ist, dass es einen Raum zwischen dem ersten Ventilelement (240) und dem zweiten Ventilelement (220, 220-1) abdichtet, in das Ventilgehäuse (110) eingesetzt ist; und
das Ventilsitzelement (210) durch integrales Ausbilden eines ersten Ventilsitzabschnitts (211), durch den die erste Öffnung (216) in dem Ventilsitzelement (210) ausgebildet ist, eines zweiten Ventilsitzabschnitts (212), durch den die zweite Öffnung (217) in dem Ventilsitzelement (210) ausgebildet ist, und einer Mehrzahl von Verbindungsabschnitten (214), die den ersten Ventilsitzabschnitt (211) und den zweiten Ventilsitzabschnitt (212) verbinden, ausgebildet ist.

2. Dreiwegeventil nach Anspruch 1, bei dem der Einlass (111) an einem Seitenteil zwischen der ersten Öffnung (216) und der zweiten Öffnung (217) ausgebildet ist.

3. Dreiwegeventil nach Anspruch 1, bei dem:
das Bypass-Loch (212a) durch den zweiten Ventilsitzabschnitt (212) verläuft; und
eine Vielzahl von Bypass-Löchern, die mit dem Bypass-Loch (212a) identisch sind, entlang eines Umfangs des zweiten Ventilsitzabschnitts (212) ausgebildet sind.

4. Dreiwegeventil nach Anspruch 1, bei dem das zweite Ventilelement (220, 220-1) umfasst:
einen Körper (221), der in einen Innenraum des Ventilsitzelements (210) eingesetzt ist; und
ein Ventil (222, 222-1), das von dem Körper (221) nach außen vorsteht und das Bypass-Loch (212a) öffnet oder verschließt.

5. Dreiwegeventil nach Anspruch 4, bei dem:
ein Kraftübertragungsabschnittsgehäuse (120) zur Aufnahme eines Kraftübertragungselements (320, 330), das zur Übertragung einer Kraft der Antriebseinheit (400) konfiguriert ist, mit einem oberen Abschnitt des Ventilgehäuses (110) gekoppelt ist;
das Ventilsitzelement (210) eine Halterung (213), die von dem zweiten Ventilsitzabschnitt (212) beabstandet ist und so konfiguriert ist, dass sie einen unteren Endabschnitt des in einen Gehäusekörper (114) des Ventilgehäuses (110) eingesetzten Kraftübertragungsabschnittsgehäuses (120) trägt, und eine Vielzahl von Verbindungsabschnitten (215) umfasst, die die Halterung (213) und den zweiten Ventilsitzabschnitt (212) verbinden; und
das Ventil (222, 222-1) bewegt wird, während es durch den Verbindungsabschnitt (215) in einem Zustand geführt wird, in dem das Ventil (222, 222-1) zwischen den benachbarten Verbindungsabschnitten (215) positioniert ist.

6. Dreiwegeventil nach Anspruch 5, bei dem:
ein Führungsvorsprung (223), der von einer Außenfläche des Körpers (221) nach außen vorsteht, an dem zweiten Ventilelement (220, 220-1) ausgebildet ist; und
eine Führungsnut (215a), in die der Führungsvorsprung (223) eingesetzt und geführt wird, wenn das zweite Ventilelement (220, 220-1) bewegt wird, in einer Innenfläche des Verbindungsabschnitts (215) ausgebildet ist.

7. Dreiwegeventil nach Anspruch 4, bei dem das heißwasserseitige Ventil (242) des ersten Ventilelements (240) in einem Zustand betrieben wird, in dem das heißwasserseitige Ventil (242) in dem Körper (221) des zweiten Ventilelements (220, 220-1) positioniert ist.

8. Dreiwegeventil nach Anspruch 1, bei dem eine Seite des zweiten Ventilelements (220, 220-1), die dem Bypass-Loch (212a) gegenüberliegt, von einer zweiten Feder (260) elastisch abgestützt wird.

9. Dreiwegeventil nach Anspruch 8, bei dem:
ein Kraftübertragungsabschnittsgehäuse (120) zur Aufnahme eines Kraftübertragungselements (320, 330), das zur Übertragung einer Kraft von der Antriebseinheit (400) konfiguriert ist, mit einem oberen Abschnitt des Ventilgehäuses (110) gekoppelt ist;
der Ventilschaft (310) mit einem oberen Ende, das mit dem Kraftübertragungselement (320) gekoppelt ist, vorgesehen ist, um durch das Kraftübertragungsabschnittsgehäuse (120) zu verlaufen;
das zweite Ventilelement (220, 220-1) einen Körper (221), der in einen Innenraum des Ventilsitzelements (210) eingesetzt ist und eine Ringform aufweist, ein Ventil (222, 222-1), das von dem Körper (221) nach außen vorsteht und das Bypass-Loch (212a) öffnet oder schließt, und eine Vielzahl von Rippen (224) umfasst, die von einer Außenfläche des Körpers (221) nach außen vorstehen und entlang eines Umfangs einer Außenfläche des Körpers (221) in einem vorbestimmten Abstand voneinander angeordnet sind; und
ein oberes Ende und ein unteres Ende der zweiten Feder (260) jeweils von einer unteren Fläche des Kraftübertragungsabschnittsgehäuses (120) und der Rippe (224) getragen werden.

10. Dreiwegeventil nach Anspruch 9, bei dem:
die erste Feder (340) elastisch zwischen einer Innenfläche eines unteren Abschnitts des Kraftübertragungsabschnittsgehäuses (120) und einer unteren Seitenfläche des Kraftübertragungselements (320) gelagert ist; und
ein O-Ring (361) zwischen dem Ventilschaft (310) und einem Durchgangsabschnitt des Kraftübertragungsabschnittsgehäuses (120) angeordnet ist, um eine Dichtung aufrechtzuerhalten.

11. Dreiwegeventil nach Anspruch 8, bei dem:
das Ventilsitzelement (210) durch Spritzgießen eines synthetischen Harzes gebildet ist;
ein Ventilsitzvorsprung (212b), der in Richtung des zweiten Ventilelements (220) vorsteht, an einer äußeren Umfangsfläche des Bypass-Lochs (212a) ausgebildet ist; und
das zweite Ventilelement (220), das so konfiguriert ist, dass es in Kontakt mit dem Ventilsitzvorsprung (212b) kommt, mit einer flachen Oberfläche ausgebildet ist.

12. Dreiwegeventil nach Anspruch 6, bei dem das zweite Ventilelement (220) aus einem Acetalharz, Polyoxometalat, POM, gebildet ist.

13. Dreiwegeventil nach Anspruch 4, bei dem:
eine Packung (280-1) mit dem Ventil (222-1) gekoppelt ist; und
das Bypass-Loch (212a) durch die Packung (280-1) geöffnet oder geschlossen wird.

## Revendications

1. Vanne à trois voies comprenant :
un boîtier de vanne (110) dans lequel une entrée (111) à travers laquelle de l'eau de chauffage est introduite, une première sortie (112) configurée pour délivrer l'eau de chauffage introduite à travers l'entrée (111) à une zone cible de chauffage, et une seconde sortie (113) configurée pour délivrer l'eau de chauffage introduite à travers l'entrée (111) à un échangeur de chaleur à eau chaude sont formées d'un seul tenant ;
un premier élément de vanne (240) configuré pour être ouvert ou fermé de manière à ouvrir sélectivement l'une quelconque de la première sortie (112) et de la seconde sortie (113) ;
une unité d'entraînement (400) configurée pour fournir une force d'entraînement afin d'ouvrir ou de fermer le premier élément de vanne (240) ; et
un second élément de vanne (220, 220-1) configuré pour, lorsqu'une pression d'eau de chauffage d'un côté de la première sortie (112) est supérieure à une pression réglée dans un état dans lequel le premier élément de vanne (240) ouvre un côté de la première sortie (112) et ferme un côté de la seconde sortie (113), ouvrir un trou de dérivation (212a) afin de permettre à l'eau de chauffage de s'écouler vers la seconde sortie (113), et être actionné indépendamment du premier élément de vanne (240),
**caractérisée en ce que**
le premier élément de vanne (240) est couplé à un arbre de vanne (310) déplacé de manière linéaire par l'unité d'entraînement (400) ;
le premier élément de vanne (240) comprend une vanne côté chauffage (241) couplée à un côté de l'arbre de vanne (310) et configurée pour ouvrir ou fermer une première ouverture (216) qui communique avec la première sortie (112), et une vanne côté eau chaude (242) couplée à l'autre côté de l'arbre de vanne (310) et configurée pour ouvrir ou fermer une seconde ouverture (217) qui communique avec la seconde sortie (113) ; et
l'arbre de vanne (310) et le premier élément de vanne (240) sont poussés vers l'unité d'entraînement (400) par une force élastique d'un premier ressort (340),
un élément de siège de vanne (210), configuré pour sceller un espace entre le premier élément de vanne (240) et le second élément de vanne (220, 220-1), est inséré dans le boîtier de vanne (110) ; et
l'élément de siège de vanne (210) est formé en formant intégralement une première partie de siège de vanne (211) à travers laquelle la première ouverture (216) est formée dans l'élément de siège de vanne (210), une seconde partie de siège de vanne (212) à travers laquelle la seconde ouverture (217) est formée dans l'élément de siège de vanne (210), et une pluralité de parties de connexion (214) connectant la première partie de siège de vanne (211) et la seconde partie de siège de vanne (212).

2. Vanne à trois voies selon la revendication 1, dans laquelle l'entrée (111) est formée au niveau d'une partie latérale entre la première ouverture (216) et la seconde ouverture (217).

3. Vanne à trois voies selon la revendication 1, dans laquelle :
le trou de dérivation (212a) passe à travers la seconde partie de siège de vanne (212) ; et
une pluralité de trous de dérivation identiques au trou de dérivation (212a) sont formés le long d'une circonférence de la seconde partie de siège de vanne (212).

4. Vanne à trois voies selon la revendication 1, dans laquelle le second élément de vanne (220, 220-1) comprend :
un corps (221) inséré dans un espace interne de l'élément de siège de vanne (210) ; et
une vanne (222, 222-1) qui fait saillie vers l'extérieur à partir du corps (221) et ouvre ou ferme le trou de dérivation (212a) .

5. Vanne à trois voies selon la revendication 4, dans laquelle :
un boîtier de partie de transmission de puissance (120) pour recevoir un élément de transmission de puissance (320, 330) configuré pour transmettre de la puissance de l'unité d'entraînement (400) est couplé à une partie supérieure du boîtier de vanne (110) ;
l'élément de siège de vanne (210) comprend un support (213) espacé de la seconde partie de siège de vanne (212) et configuré pour supporter une partie d'extrémité inférieure du boîtier de partie de transmission de puissance (120) inséré dans un corps de boîtier (114) du boîtier de vanne (110), et une pluralité de parties de connexion (215) connectant le support (213) et la seconde partie de siège de vanne (212) ; et
la vanne (222, 222-1) est déplacée tout en étant guidée par la partie de connexion (215) dans un état dans lequel la vanne (222, 222-1) est positionnée entre les parties de connexion adjacentes (215).

6. Vanne à trois voies selon la revendication 5, dans laquelle :
une saillie de guidage (223) faisant saillie vers l'extérieur à partir d'une surface extérieure du corps (221) est formée sur le second élément de vanne (220, 220-1) ; et
une rainure de guidage (215a) dans laquelle la saillie de guidage (223) est insérée et guidée lorsque le second élément de vanne (220, 220-1) est déplacé est formée dans une surface intérieure de la partie de connexion (215).

7. Vanne à trois voies selon la revendication 4, dans laquelle la vanne côté eau chaude (242) du premier élément de vanne (240) est actionnée dans un état dans lequel la vanne côté eau chaude (242) est positionnée dans le corps (221) du second élément de vanne (220, 220-1).

8. Vanne à trois voies selon la revendication 1, dans laquelle un côté du second élément de vanne (220, 220-1) opposé au trou de dérivation (212a) est supporté de manière élastique par un second ressort (260).

9. Vanne à trois voies selon la revendication 8, dans laquelle :
un boîtier de partie de transmission de puissance (120) pour recevoir un élément de transmission de puissance (320, 330) configuré pour transmettre de la puissance de l'unité d'entraînement (400) est couplé à une partie supérieure du boîtier de vanne (110) ;
l'arbre de vanne (310) ayant une extrémité supérieure couplée à l'élément de transmission de puissance (320) est prévu pour passer à travers le boîtier de partie de transmission de puissance (120) ;
le second élément de vanne (220, 220-1) comprend un corps (221) inséré dans un espace intérieur de l'élément de siège de vanne (210) et ayant une forme annulaire, une vanne (222, 222-1) qui fait saillie vers l'extérieur à partir du corps (221) et ouvre ou ferme le trou de dérivation (212a), et une pluralité de nervures (224) qui font saillie vers l'extérieur à partir d'une surface extérieure du corps (221) et sont espacées l'une de l'autre d'une distance prédéterminée le long d'une circonférence d'une surface extérieure du corps (221) ; et
une extrémité supérieure et une extrémité inférieure du second ressort (260) sont supportées respectivement par une surface inférieure du boîtier de partie de transmission de puissance (120) et la nervure (224).

10. Vanne à trois voies selon la revendication 9, dans laquelle :
le premier ressort (340) est supporté de manière élastique entre une surface intérieure d'une partie inférieure du boîtier de partie de transmission de puissance (120) et une surface latérale inférieure de l'élément de transmission de puissance (320) ; et
un joint torique (361) est interposé entre l'arbre de vanne (310) et une partie traversante du boîtier de partie de transmission de puissance (120) afin de maintenir un joint d'étanchéité.

11. Vanne à trois voies selon la revendication 8, dans laquelle :
l'élément de siège de vanne (210) est formé par moulage par injection d'une résine synthétique ;
une saillie de siège de vanne (212b) faisant saillie vers le second élément de vanne (220) est formée sur une surface circonférentielle extérieure du trou de dérivation (212a) ; et
le second élément de vanne (220) configuré pour venir en contact avec la saillie de siège de vanne (212b) est formé avec une surface plate.

12. Vanne à trois voies selon la revendication 6, dans laquelle le second élément de vanne (220) est formé d'une résine acétal, le polyoxométalate, POM.

13. Vanne à trois voies selon la revendication 4, dans laquelle :
une garniture d'étanchéité (280-1) est couplée à la vanne (222-1); et
le trou de dérivation (212a) est ouvert ou fermé par la garniture (280-1).
